(19) Europäisches Patentamt
European Patent Office
Office européen des brevets

(11) Publication number: **0 519 082 A1**

## EUROPEAN PATENT APPLICATION
### published in accordance with Art. 158(3) EPC

(21) Application number: **92901874.5**

(22) Date of filing: **26.12.91**

(86) International application number:
**PCT/JP91/01776**

(87) International publication number:
**WO 92/12470 (23.07.92 92/19)**

(51) Int. Cl.5: **G05B 19/403**, G05B 19/42

(30) Priority: **27.12.90 JP 414576/90**

(43) Date of publication of application:
**23.12.92 Bulletin 92/52**

(84) Designated Contracting States:
**DE IT SE**

(71) Applicant: **FANUC LTD.**
**3580, Shibokusa Aza-Komanba, Oshino-mura**
**Minamitsuru-gun, Yamanashi 401-05(JP)**

(72) Inventor: **WATANABE, Atsushi, R 7-207, Fanuc**
**Manshonharimori**
**3539-1 Shibokusa Oshino-mura**
**Minamitsuru-gun Yanasshi 401-05(JP)**
Inventor: **ITO, Takayuki Fanuc Dai-3**
**Vira-karamatsu**
**3527-1 Shinokusa Oshino-mura**
**Minamitsuru-gun Yamanashi 401-05(JP)**
Inventor: **NISHI, Makoto Fanuc Dai-2**
**Vira-karamatsu**
**3528, Shibokusa Oshino-mura**
**Minamitsuru-gun Yamanashi 401-05(JP)**

(74) Representative: **Billington, Lawrence Emlyn et al**
**Haseltine Lake & Co Hazlitt House 28,**
**Southampton Buildings Chancery Lane**
**London WC2A 1AT(GB)**

(54) **METHOD OF TEACHING PALLETIZING.**

(57) A stack pattern corresponding to a work arrangement (50) is previously prepared in a robot control system (10). In teaching, at first, work coordinate system is set (S1), a stack pattern corresponding to the work arrangement is selected (S2), further, arrangement data on the work arrangement are input (S3), and two points in the work arrangement are taught (S4). Then, the robot control system (10) generates an operation program for palletizing, from the data.

FIG . 1

START

SET A WORK COODINATE SYSTEM — S1

SELECT A STACK PATTERN — S2

INPUT ARRAY DATA — S3

TEACH TWO POINTS OF A WORKPIECE ARRAY CONFIGURATION — S4

CORRECTING OPERATION IS REQUIRED — S5

YES

NO

INPUT CORRECTION DATA — S6

CREATE A PALLETIZING OPERATION PROGRAM — S7

E N D

2

## Technical Field

The present invention relates to a teaching method for palletizing in which a palletizing operation program is taught to a robot, more particularly to a simplified teaching method for palletizing.

## Background Art

Recently, robots have come to be used in many factories, and the cases where a plurality of robots are used are increasing, especially in the cases of production lines. In such a production line, there is an increasing demanded for further reducing the time required for setup, rearrangement, etc. of the production line. Hence, even in teaching for the creation of a palletizing operation programs, teaching is required to be done in a shorter period of time.

Generally, in order to teach a palletizing operation program, four or five points of a workpiece array configuration to be palletized must be taught. For example, in the case of the workpiece array configuration of a rectangular prism, four corner points of the bottom face of the rectangular prism and a point in the top face of the prism are taught. When a large number of robots are used in the production line, it naturally takes a longer time to teach an operation program.

## Disclosure of the Invention

Prior to a teaching operation for palletizing, a work coordinate system must be set. In general , the workpiece array configuration is placed in a specific relationship relative to a work coordinate system. For example, in the case of the workpiece array configuration of a rectangular prism, the workpiece array configuration is generally placed so that two sides, extending perpendicularly to each other, of the bottom face of the workpiece array configuration of a rectangular prism respectively extend in parallel with the X and Y axes of the work coordinate system whose X-Y plane corresponds to an upper face of a table on which the workpiece array configuration is placed.

An object of the present invention is to provide a teaching method for palletizing, which is characterized to utilize the fact that a workpiece array configuration is palletized so that a specific relationship is established between the configuration and a work coordinate system, thereby making it possible to teach a palletizing operation program on the basis of a reduced number of taught points.

To achieve the above object, a teaching method for palletizing according to the present invention comprises the steps of: setting a work coordinate system in a robot control system; selecting and inputting a stack pattern which is determined in dependence on a workpiece array configuration; inputting array data indicative of numbers of workpieces respectively defining line, row, and layers of the workpiece array configuration; teaching two particular points of a sample workpiece array configuration which is arranged in a specific relationship relative to the work coordinate system; and creating a palletizing operation program by means of a robot control unit on the basis of the work coordinate system, the stack pattern, the array data, and the two particular taught points. Preferably, various stack patterns are stored beforehand in the robot control unit, and a desired one of the stored stack patterns is selected and input.

In case that the palletizing is conducted to obtain a workpiece array configuration which is different in position and orientation from the sample workpiece array configuration, amounts of parallel movement in the directions of the respective axes of the work coordinate system and an amount of rotation around the vertical axis (Z axis) of the workpiece array configuration are input, as correction data, into the robot control, prior to the creation of the palletizing operation program by means of the robot control unit. Then, the robot control unit creates the palletizing operation program for forming a workpiece array configuration whose position and orientation are different from those of the sample workpiece array configuration, on the basis of the correction data, the input work coordinate system, stack pattern, and array data.

If the stack pattern is a rectangular prism, it is preferable to teach a vertex of the bottom face of the rectangular prism and the vertex of the top face which lies on the diagonal line extending from the former vertex, as the aforesaid two particular points for the teaching of the sample workpiece array configuration. Furthermore, if the stack pattern is a cylindrical prism, it is preferable to teach, as the two particular points, a point on the circumference of the bottom face of the cylindrical prism and the center point of the upper face of the prism.

## Brief Description of the Drawings

Fig. 1 is a flowchart illustrating teaching procedures to be executed in a teaching method for palletizing according to the present invention; and
Fig. 2 is a view showing the whole arrangement of a robot system for embodying the present invention.

## Best Mode of Carrying Out the Invention

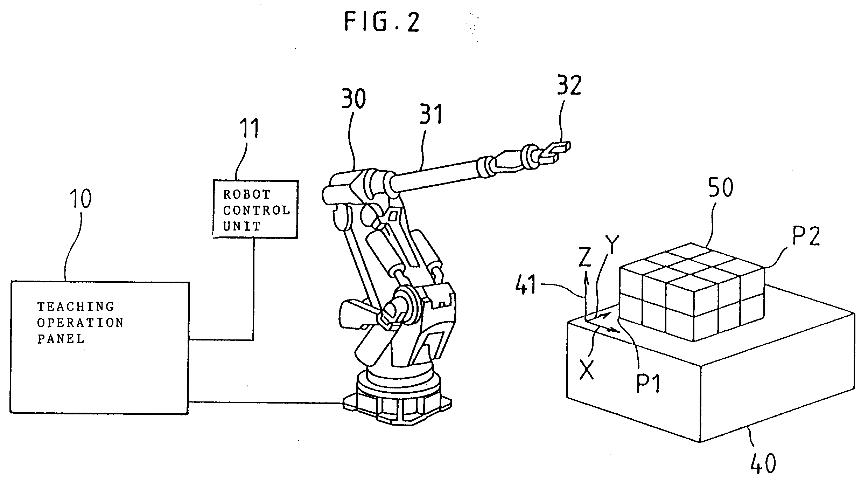

With reference to the accompanying drawings, an embodiment of the present invention will be described. Fig. 2 is a view illustrating the whole arrangement of a robot system for embodying a method of the present invention. In Fig. 2, a teaching operation panel 11 is connected to a robot control unit 10, and a palletizing operation program is taught using the panel 11. A robot 30 is connected to the robot control unit 10. The robot 30 is controlled by the robot control unit 10. A hand 32 for palletizing workpieces is attached to the distal end of an arm 31 of the robot 30. The gripper hand 32 is attached to the robot 30, which is shown by way of example in Fig. 2. Alternatively, however, a suction hand, etc. may be employed depending on the kind of workpiece.

In order to teach the palletizing operation program, a workpiece array configuration 50 is first placed, as a sample for teaching, on a workpiece-placing surface of a table 40. Next, a work coordinate system 41 is taught to recognize the table 40 and workpiece array configuration 50, etc. A teaching jig is attached to the robot 30 instead of the hand 32 to teach the work coordinate system 41 to the robot 30. The teaching of the work coordinate system 41 is made in a conventional manner. Normally, this teaching is accomplished by teaching an arbitrary point in the surface, i.e., the workpiece-placing surface of the table 40 as the origin, another arbitrary point as one point on the X axis (or Y axis), and an arbitrary point, which is not on a line connecting the origin and another point. Thus, a plane is specified when these three points are taught, and the work coordinate system 41 is determined according to the taught origin, the taught point on the X axis (or Y axis) and the direction of a normal vector associated with the specified plane. On the other hand, the workpiece array configuration 50 is placed on the workpiece-placing surface so that a predetermined orientation relationship is established between the configuration and the work coordinate system 41. For example, if the workpiece array configuration 50 is a rectangular prism as shown in Fig. 2, the workpiece array configuration is placed so that the sides, which are perpendicular to each other, of its bottom face respectively extend in parallel to the X and Y axes of the work coordinate system. For instance, when the teaching jigs are positioned respectively at both ends of one side of the bottom face of workpiece array configuration 50, and Y-axis coordinate values of the workpiece coordinate system are equal, one side of said workpiece array configuration becomes parallel to X-axis, and the sides of said bottom face, which are perpendicular to each other, become parallel to X- and Y-axes of coordinate system 41. Moreover, if the workpiece array configuration is a polygonal prism having a polygonal bottom face, the workpiece array configuration is placed so that a particular relationship (parallel) is established between the X axis (or Y axis) of the work coordinate system and a line which connects the center position with a specific angular position in the bottom face of the polygonal prism. However, if the workpiece array configuration is a cylindrical prism, the workpiece array configuration may simply be placed on a certain position since its entire shape does not change even when it rotates.

In general, a stack pattern of the workpiece array configuration is fixedly determined. Fig. 2 shows an example where the stack pattern is a rectangular prism. predetermined stack patterns such as those for polygonal prism, cylindrical prism, etc. are previously stored in a memory (not shown) of the robot control unit 10.

Next, a selected stack pattern is inputted to in the robot control unit 10. In the example shown in Fig. 2, the stack pattern of a rectangular prism is selected and inputted. Then, a corner point P1 of the bottom face of the workpiece array configuration 50 of a rectangular prism and an opposite point P2 (a vertex on a diagonal extending from the point P1) are taught. As a result of the teaching, the bottom face of the workpiece array configuration 50 is specified by the intersections between the lines passing through the point P1 and extending in parallel to the X and Y axes of the work coordinate system 41 and the lines extending in parallel to the X and Y axes and passing through a point obtained by projecting the point P2 on the X-Y plane of the work coordinate system 41. Furthermore, the height of the workpiece array configuration 50 is specified by a Z axis coordinate value of the point P2. As a consequence, the position and orientation of the workpiece array configuration 50 are taught. Incidentally, the teaching points P1 and P2 may be arbitrary points which permit the workpiece array configuration 50 to be specified. It is also possible to teach the position and orientation of the workpiece array configuration 50 by teaching a single point P1 in the bottom plane of the workpiece array configuration and a center position of a top face thereof.

If the workpiece array configuration is a polygonal prism having the bottom plane of a polygon, its position and orientation can be taught by teaching the center position of the top face of the configuration and the corner point in its bottom plane which satisfies the aforementioned specific relationship (parallel) between the X axis (or Y axis) of the work coordinate system 41, and the line, which connects the corner point with the center position of the bottom face of the configuration, thereby selectively teaching the stack pattern of the polygonal prism.

If the workpiece array configuration is a cylindrical prism, it is possible teach the position and orientation of the workpiece array configuration by teaching the center of the top face and a single point on the circumference of the bottom face, thereby teaching the stack pattern of the cylindrical prism.

Sequentially, numbers of workpieces respectively defining the line, row, and layers, i.e., the width, depth, and height of the sample workpiece array configuration are input into the robot control unit 10, whereby the robot control unit 10 can create a palletizing operation program.

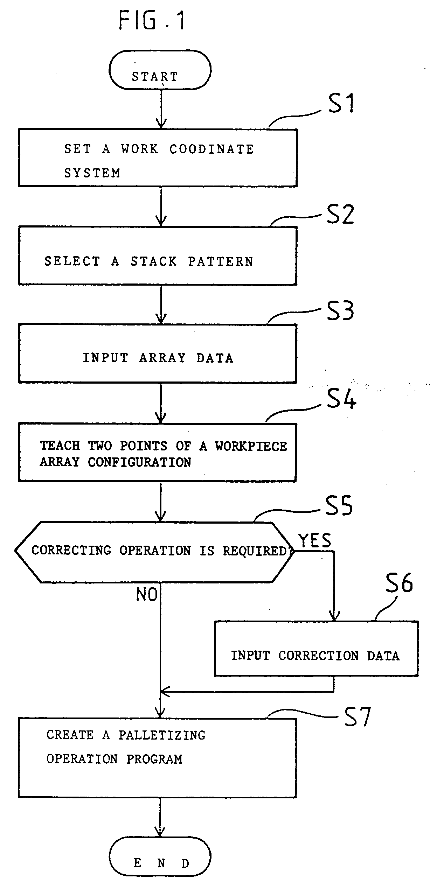

Fig. 1 is a flowchart of a teaching operation to be executed in a teaching method for palletizing of the present invention. In the drawing, each of numerals following S denotes a step number.

[S1] The work coordinate system 41 is set. To set the work coordinate system 41, a teaching jig is attached to the arm 31 of the robot 30 instead of the hand 32, and three points on the table 40 are taught by utilizing the jig (not shown) in the aforementioned manner.

[S2] One of stack patterns stored in the memory of the robot control unit 10 is selected. In the embodiment shown in Fig. 2, the stack pattern of a rectangular prism is selected.

[S3] Array data indicative of numbers of workpieces respectively defining the line, row, and layers, i.e., the width, depth, and height of the workpiece array configuration 50 are input from the teaching operation panel 11. With regard to the workpiece array configuration 50 shown in Fig. 2, array data such that the numbers of workpieces respectively defining the line, row, and layers of the configuration are 3, 3 and 2 are input from the teaching operation panel 11.

[S4] A corner point P1 of the bottom face of the sample workpiece array configuration 50 and the corner point P2 of the top face which lies on a diagonal line extending from the point P1 are taught. This teaching operation is executed by utilizing the same jig as in the setting of the work coordinate system (Step 1).

[S5] If the palletizing operation is executed with a position and orientation which are the same as those of the sample workpiece array configuration 50, then Step S7 is entered. On the other hand, if the palletizing operation is executed with a position and orientation changed or different from those of the sample, Step S6 is entered.

[S6] If the actual palletizing operation should be performed at a position different from the position on the table 40 at which the sample workpiece array configuration 50 is positioned, amounts $\Delta X$, $\Delta Y$ of parallel movement in the X and Y axis directions in the work coordinate system 41 are input. (An amount $\Delta Z$ of movement in the Z axis direction is also input, if the table for the actual palletizing operation is located at a vertical position different from that of the table on which the sample workpiece array configuration 50 is placed.) As a result, the actual palletizing operation is executed at a position which is obtained by parallel movement of the workpiece array configuration by $\Delta X$ and $\Delta Y$ in the X and Y axis directions. Moreover, if the actual palletizing operation is performed so that the resulting workpiece array configuration has its orientation which is different from that of the sample workpiece array configuration 50, an amount of rotation around the Z axis of the work coordinate system 41 must be provided.

The aforementioned correction data is inputted from the teaching operation panel 11.

[S7] The robot control unit 10 creates a palletizing operation program on the basis of the work coordinate system, stack pattern, array data, taught points (two points), and correction data.

In this manner, by teaching only two points of the workpiece array configuration placed on the table, the palletizing operation program can easily be created. Although the stack pattern is a rectangular prism in the foregoing explanation, a stack pattern of a cylindrical prism may be also selected. In this case, two points, i.e., the center of the top face of the cylindrical prism and a point on the circumference of the bottom face of the prism are taught, so that the robot control unit can create a palletizing operation program.

As described above, according to the present invention, the palletizing operation program is created on the basis of the work coordinate system, two taught points of the workpiece array configuration, etc., so that the teaching operation is simplified as compared with the conventional manner in which four or five points must be taught. As a result, it is possible to shorten time required for setup, rearrangement, etc. of a production line, or the like.

**Claims**

1. A teaching method for palletizing in which a palletizing operation program for a robot is taught, comprising the steps of:

setting a work coordinate system in a robot control system;

selecting and inputting a stack pattern which is determined in dependence on a workpiece array configuration;

inputting array data indicative of numbers of workpieces respectively defining line, row, and layers of the workpiece array configuration;

teaching two particular points of a sample workpiece array configuration which is arranged in a specific relationship relative to the work coordinate system; and

creating a palletizing operation program by means of a robot control unit on the basis of the work coordinate system, the stack pattern, the array data, and the two particular taught points.

2. A teaching method for palletizing according to claim 1, wherein various stack patterns are stored beforehand in the robot control unit, and a desired one of the stored stack patterns is selected and input.

3. A teaching method for palletizing according to claims 1 or 2, wherein after the teaching of the two particular points of the workpiece array configuration and before the creation of the operation program, correction data is input so that a palletizing operation can be executed for obtaining a workpiece array configuration which is different in position and orientation from the sample workpiece array configuration, and palletizing operation program can be created, with the correction data included.

4. A teaching method for palletizing according to claim 3, wherein the correction data are amounts of parallel movement in the directions of respective axes of the work coordinate system and an amount of rotation around a vertical axis in the palletizing.

5. A teaching method for palletizing according to claim 1, wherein the stack pattern is a rectangular prism, and a vertex of a bottom face of the rectangular prism and the vertex of a top face of the prism which lies on a diagonal line extending from the former vertex are taught.

6. A teaching method for palletizing according to claim 1, wherein the stack pattern is a cylindrical prism, and a center of a top face of the cylindrical prism and a point on a circumference of a bottom face of the cylindrical prism are taught.

# FIG.1

START

S1
SET A WORK COODINATE
SYSTEM

S2
SELECT A STACK PATTERN

S3
INPUT ARRAY DATA

S4
TEACH TWO POINTS OF A WORKPIECE
ARRAY CONFIGURATION

S5
CORRECTING OPERATION IS REQUIRED?
— YES
— NO

S6
INPUT CORRECTION DATA

S7
CREATE A PALLETIZING
OPERATION PROGRAM

E N D

# FIG.2

EP 0 519 082 A1

# INTERNATIONAL SEARCH REPORT

International Application No PCT/JP91/01776

**I. CLASSIFICATION OF SUBJECT MATTER (If several classification symbols apply, indicate all)** 6

According to International Patent Classification (IPC) or to both National Classification and IPC

Int. Cl$^5$  G05B19/403, 19/42

**II. FIELDS SEARCHED**

Minimum Documentation Searched 7

| Classification System | Classification Symbols |
|---|---|
| IPC | G05B19/403, 19/42 |

Documentation Searched other than Minimum Documentation
to the Extent that such Documents are Included in the Fields Searched 8

| | |
|---|---|
| Jitsuyo Shinan Koho | 1926 - 1991 |
| Kokai Jitsuyo Shinan Koho | 1971 - 1991 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| Y | JP, A, 1-72205 (Hitachi, Ltd.), March 17, 1989 (17. 03. 89), Line 19, upper left column to line 12, upper right column, page 4 (Family: none) | 1-6 |
| Y | JP, A, 61-26109 (Hitachi, Ltd.), February 5, 1986 (05. 02. 86), Lines 14 to 19, lower right column, page 4 (Family: none) | 1-6 |

* Special categories of cited documents: 10

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| March 25, 1992 (25. 03. 92) | April 21, 1992 (21. 04. 92) |

| International Searching Authority | Signature of Authorized Officer |
|---|---|
| Japanese Patent Office | |